# FASCICULE DE BREVET EUROPEEN

(11) **EP 2 620 363 B1**
(45) Date de publication et mention de la délivrance du brevet: **28.12.2016**
(21) Numéro de dépôt: 13151785.6
(22) Date de dépôt: 18.01.2013
(51) Int. Cl.: B64C 25/42, G05D 1/00

(54) **Procédé et dispositif d'aide au pilotage d'un avion lors d'une phase d'atterrissage**
Verfahren und Vorrichtung zur Unterstützung der Steuerung eines Flugzeugs in der Landephase
Method and device for assisted piloting of an aircraft during a landing phase

(30) Priorité: 24.01.2012 FR 1250645
(43) Date de publication de la demande: 31.07.2013
(73) Titulaire: Airbus Opérations SAS, 31060 Toulouse (FR)
(72) Inventeur: Muller, Jean, 31170 TOURNEFEUILLE (FR); Essadouni, Malika, 31170 TOURNEFEUILLE (FR)
(74) Mandataire: Gevers & Orès

(56) Documents cités:
- EP-A1- 0 025 614
- FR-A1- 2 817 979
- FR-A1- 2 857 468
- FR-A1- 2 895 726

## Description

La présente invention concerne un procédé et un dispositif d'aide au pilotage d'un avion, en particulier d'un avion de transport civil, lors d'une phase d'atterrissage, ledit avion étant pourvu d'un système de freinage automatique qui est susceptible de freiner automatiquement l'avion au sol.

Dans le cadre d'un freinage automatique, on connaît une fonction dite BTV (pour « Brake-To-Vacate » en anglais) qui a pour objectif de calculer une décélération commandée qui va permettre à l'avion (roulant sur une piste lors de l'atterrissage) de s'arrêter automatiquement au niveau d'une sortie de la piste.

En particulier, par les documents FR-2 817 979 et FR-2 857 468, on connaît des dispositifs de commande automatique de la décélération d'un avion en phase de roulage, qui mettent en oeuvre une telle fonction BTV. Ces dispositifs permettent, à l'équipage de l'avion, de sélectionner une bretelle de sortie sur la piste d'atterrissage et de gérer automatiquement et optimalement (aide à la sélection d'une bretelle de sortie réaliste et compatible avec les performances connues d'atterrissage, minimisation du temps d'occupation de la piste, minimisation de l'énergie de freinage nécessaire, amélioration du confort) la décélération de l'avion lors du roulage à l'atterrissage jusqu'à l'atteinte de la bretelle de sortie sélectionnée. Par conséquent, dans des conditions opérationnelles normales, l'atteinte optimale de cette bretelle de sortie est garantie grâce à ces dispositifs usuels.

Le calcul de la décélération commandée précitée est principalement basé sur la vitesse sol de l'avion et sur les distances de l'avion et de la sortie (sélectionnée par le pilote) par rapport au seuil de la piste.

Par ailleurs, on connaît :
- par le document FR-2 895 726, un système et un procédé d'assistance au freinage d'un aéronef sur une piste d'atterrissage, qui utilise une loi de décélération prédéfinie ; et
- par le document EP-0 025 614, un dispositif apte à être monté sur un aéronef et destiné à déterminer en continu un intervalle de temps durant lequel une action doit être réalisée.

La présente invention concerne un dispositif d'aide au pilotage d'un avion lors d'une phase d'atterrissage sur un aéroport, qui a pour objet de garantir, avec une probabilité élevée, compatible avec les exigences requises lors d'un atterrissage, que l'avion s'arrêtera toujours avant la fin de la piste, selon la revendication 1.

A cet effet, selon l'invention, ledit dispositif du type pourvu d'un système de freinage automatique qui est susceptible de freiner automatiquement l'avion lors du roulage au sol sur une piste d'atterrissage, ledit système de freinage comportant :
- un calculateur de commandes de vol, pour calculer une décélération nominale permettant, lorsqu'elle est appliquée à l'avion, de l'arrêter au niveau d'une sortie sélectionnée sur la piste d'atterrissage ; et
- un calculateur de freinage, pour calculer, à partir d'une décélération reçue, des ordres de commande de moyens de freinage de l'avion,
est remarquable en ce que :
- ledit dispositif comporte de plus :
   - des premiers moyens pour fournir des données présentant un taux d'occurrence d'erreur ou d'altération qui est compatible avec les objectifs de sécurité requis sur un avion lors d'un atterrissage ;
   - des deuxièmes moyens pour calculer, à partir desdites données, une décélération minimale permettant de s'assurer que l'avion s'arrête avant la fin de la piste d'atterrissage, lorsque cette décélération minimale est appliquée audit avion ; et
   - des troisièmes moyens pour comparer ladite décélération nominale à ladite décélération minimale et pour transmettre audit calculateur de freinage la décélération la plus élevée ; et
- lesdits deuxièmes et troisièmes moyens font partie dudit calculateur de commandes de vol.

Ledit calculateur de commandes de vol et ledit calculateur de freinage sont certifiés DAL A selon la norme DO-178B, c'est-à-dire à haut niveau intégrité.

Ainsi, grâce à l'invention :
- d'une part, tous les calculs relatifs à la décélération minimale sont réalisés dans des calculateurs à haut niveau d'intégrité (certifiés DAL A) et ceci à partir de données qui présentent un haut niveau d'intégrité ; et
- d'autre part, on prend en compte la décélération minimale (permettant de s'assurer que l'avion s'arrête avant la fin de la piste d'atterrissage) si elle est plus élevée que ladite décélération nominale (destinée à arrêter l'avion au niveau d'une sortie sélectionnée sur la piste d'atterrissage) qui est susceptible d'être erronée comme indiqué ci-dessus.

Ces caractéristiques permettent de garantir, avec une probabilité élevée qui est compatible avec les exigences requises lors d'un atterrissage, que l'avion s'arrêtera toujours avant la fin de la piste, c'est-à-dire qu'il ne sortira pas (longitudinalement) de la piste, dans le cas où une hauteur prédéterminée (précisée ci-après) est franchie au plus tard au seuil de la piste.

Dans le cadre de la présente invention, on entend, par « haut niveau d'intégrité » de données (ou de systèmes), le fait que ces données (ou les données traitées par ces systèmes) présentent un taux d'occurrence (ou probabilité de survenue) d'erreur ou d'altération, qui est compatible avec les objectifs de sécurité requis sur un avion lors d'un atterrissage.

Selon l'invention, lesdites données comprennent au moins l'une des données suivantes :
- une valeur de vitesse sol de l'avion ;
- une estimation de la distance entre l'avion et le seuil de la piste utilisée pour l'atterrissage ;
- une valeur de longueur de la piste utilisée pour l'atterrissage.

Selon l'invention, lesdits premiers moyens comprennent les éléments suivants :
- une pluralité de systèmes de références inertielles susceptibles de générer des vitesses sol de l'avion, ainsi que des moyens de passivation pour fournir une vitesse sol comme donnée, uniquement en cas de cohérence entre les vitesses sol issues respectivement desdits systèmes de références inertielles, ce qui permet alors de fournir une vitesse sol qui présente un haut niveau d'intégrité ; et/ou
- des moyens qui sont intégrés dans ledit calculateur de commandes de vol (à haut niveau d'intégrité) et qui sont formés de manière à estimer la distance entre l'avion et le seuil de la piste utilisée pour l'atterrissage, en intégrant une vitesse sol, ce qui permet de calculer et fournir une distance avion-seuil présentant un haut niveau d'intégrité.

En outre, avantageusement, pour pouvoir fournir une valeur de longueur de piste présentant également un haut niveau d'intégrité, lesdits premiers moyens comprennent :
- des moyens de stockage qui sont intégrés dans ledit calculateur de commande de vol et qui mémorisent une valeur de longueur de la piste utilisée pour l'atterrissage ; et
- un calculateur d'affichage du cockpit de l'avion qui reçoit cette valeur et l'affiche sur un écran du poste de pilotage. Avantageusement, ce calculateur d'affichage est certifié DAL A selon la norme DO-178B.

Par procédure, le pilote doit alors vérifier que la valeur affichée est bien la même que celle inscrite sur des cartes d'approche à sa disposition, et si tel n'est pas le cas, il doit dégager la fonction de freinage automatique de type BTV utilisée. Cette procédure assure ainsi que la valeur de longueur de piste utilisée dans le calcul de la décélération minimale sera, elle aussi, à haut niveau d'intégrité.

Toutes les données utilisées pour le calcul de la décélération minimale devant présenter un haut niveau d'intégrité, on utilise donc, selon l'invention, soit des données issues de calculateurs à haut niveau d'intégrité, soit des données qui ont été consolidées par un moyen (ou une procédure) approprié.

Par ailleurs, avantageusement, lesdits deuxièmes moyens calculent ladite décélération minimale à partir d'une estimation de la distance entre l'avion et le seuil de la piste, et de la longueur de la piste, en mettant en oeuvre une loi de décélération usuelle.

En outre, avantageusement, le calculateur de commandes de vol est un calculateur de commandes de vol primaire de l'avion.

La présente invention concerne également un procédé d'aide au pilotage d'un avion lors d'une phase d'atterrissage sur un aéroport, ledit avion étant pourvu d'un système de freinage automatique qui est susceptible de freiner automatiquement l'avion lors du roulage au sol sur une piste d'atterrissage et qui comporte un calculateur de commandes de vol et un calculateur de freinage, tels que précités selon la revendication 7.

Selon l'invention, ledit procédé est remarquable en ce que :
- on prévoit de plus :
   - des premiers moyens pour fournir des données présentant un taux d'occurrence d'erreur ou d'altération qui est compatible avec les objectifs de sécurité requis sur un avion lors d'un atterrissage ;
   - des deuxièmes moyens pour calculer, à partir desdites données, une décélération minimale permettant de s'assurer que l'avion s'arrête avant la fin de la piste d'atterrissage, lorsque cette décélération minimale est appliquée à l'avion; et
   - des troisièmes moyens pour comparer ladite décélération nominale à ladite décélération minimale et pour transmettre audit calculateur de freinage la décélération la plus élevée ; et
- lesdits deuxièmes et troisièmes moyens font partie dudit calculateur de commandes de vol.

Par ailleurs, la présente invention concerne également un avion, en particulier d'un avion de transport civil, qui comporte un dispositif d'aide au pilotage, tel que celui précité.

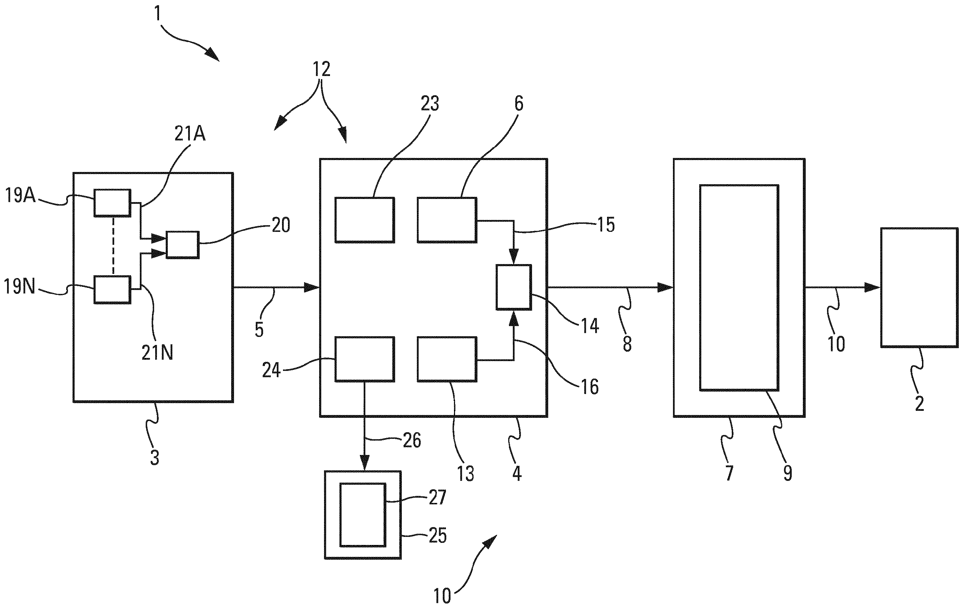

L'unique figure du dessin annexé fera bien comprendre comment l'invention peut être réalisée. Cette figure unique est le schéma synoptique d'un dispositif d'aide au pilotage conforme à l'invention.

Le dispositif 1 conforme à l'invention et représenté schématiquement sur la figure, est destiné à aider au pilotage d'un avion (non représenté), en particulier d'un avion de transport civil, lors d'une phase d'atterrissage, et plus particulièrement lors du roulage sur une piste d'atterrissage après l'atterrissage proprement dit.

La présente invention est appliquée à un avion qui est équipé d'un système de freinage automatique 10 (faisant partie dudit dispositif 1). De façon usuelle, lorsqu'il est activé, un tel système de freinage automatique 10 actionne automatiquement des moyens de freinage 2, tels que des freins de l'avion A notamment, dans le but de freiner l'avion A lors du roulage au sol.

Ledit dispositif 1 comporte, comme représenté sur la figure :
- un ensemble 3 de sources d'informations usuelles, qui sont en mesure de déterminer les valeurs actuelles de différents paramètres (position, vitesse,...) de l'avion A ;
- un calculateur de commandes de vol 4 certifié DAL A, à haut niveau d'intégrité (de type PRIM sur un avion A380), qui est relié par l'intermédiaire d'une liaison 5 audit ensemble 3 et qui comporte des moyens 6 usuels susceptibles de mettre en oeuvre une fonction de type BTV. Plus précisément, lesdits moyens 6 sont susceptibles de calculer une décélération nominale permettant, lorsqu'elle est appliquée à l'avion (via les moyens de freinage 2), de l'arrêter automatiquement au niveau d'une sortie sélectionnée sur la piste d'atterrissage utilisée. Le dispositif 1 comporte également des moyens non représentés permettant à un pilote d'armer la fonction BTV ; et
- un calculateur de freinage 7 également certifié DAL A, donc à haut niveau d'intégrité (de type BCS sur un avion A380), qui est relié par l'intermédiaire d'une liaison 8 audit calculateur 4 et qui comporte des moyens usuels 9 pour calculer, à partir d'une décélération reçue du calculateur 4, des ordres de commande des moyens de freinage 2 de l'avion, qui sont transmis à ces derniers via une liaison 10.

Selon l'invention, ledit dispositif 1 comporte de plus :
- des moyens 12 pour fournir des données présentant un haut niveau d'intégrité ;
- des moyens 13 pour calculer automatiquement, à partir desdites données à haut niveau d'intégrité, une décélération minimale permettant de s'assurer que l'avion s'arrête avant la fin de la piste d'atterrissage, lorsque cette décélération minimale est appliquée audit avion ; et
- des moyens 14 pour comparer automatiquement ladite décélération nominale (reçue via une liaison 15 des moyens 6) à ladite décélération minimale (reçue via une liaison 16 des moyens 13) et pour transmettre automatiquement audit calculateur 7 la décélération la plus élevée de ces deux décélérations, en vue de son application à l'avion.

De plus, selon l'invention, comme représenté sur la figure, lesdits moyens 13 et 14 font partie dudit calculateur 4 certifié DAL A (donc à haut niveau d'intégrité), de préférence un calculateur de commandes de vol primaire. La certification DAL A est selon la norme DO-178B.

Cette décélération sélectionnée par les moyens 14 qui est donc envoyée au calculateur (de freinage) 7 (de type BCS sur un avion A380), assure dans le cas nominal que l'avion s'arrêtera au niveau de la sortie sélectionnée de façon usuelle par le pilote, tout en garantissant en cas de panne (et ce avec un haut niveau d'intégrité) que l'avion s'arrêtera avant la fin de la piste. Ceci est garantit dans le cas où une hauteur prédéterminée (précisée ci-après) est franchie au plus tard au seuil de la piste.

En effet, grâce à l'invention :
- d'une part, tous les calculs relatifs à ladite décélération minimale sont réalisés dans des calculateurs à haut niveau d'intégrité (certifiés DAL A) et ceci à partir de données qui présentent également un haut niveau d'intégrité, comme précisé ci-dessous ; et
- d'autre part, on prend en compte ladite décélération minimale (permettant de s'assurer que l'avion s'arrête avant la fin de la piste d'atterrissage) si elle est plus élevée que ladite décélération nominale (destinée à arrêter l'avion au niveau d'une sortie sélectionnée sur la piste d'atterrissage) qui est susceptible d'être erronée,
ce qui permet de garantir, avec une probabilité élevée qui est compatible avec les exigences requises lors d'un atterrissage, que l'avion s'arrêtera toujours avant la fin de la piste, c'est-à-dire qu'il ne sortira pas (longitudinalement) de la piste.

Dans le cadre de la présente invention, on entend, par « haut niveau d'intégrité » de données [ou de systèmes (calculateurs 4 et 7)], le fait que ces données (ou les données traitées par ces systèmes) présentent un taux d'occurrence d'erreur ou d'altération qui est compatible avec les objectifs de sécurité requises sur un avion lors d'un atterrissage.

Par ailleurs, lesdits moyens 12 comprennent :
- une pluralité de systèmes de références inertielles usuels 19A à 19N (de type IRS, certifiés DAL A), N étant un entier supérieur à 1, susceptibles de générer de façon usuelle des vitesses sol de l'avion ; et
- des moyens de passivation 20 qui sont reliés par l'intermédiaire de liaisons 21 A à 21N respectivement auxdits systèmes de références inertielles 19A à 19N et qui sont formés de manière à vérifier ces vitesses sol et à fournir une vitesse sol courante comme donnée, uniquement en cas de cohérence entre les vitesses sol issues respectivement desdits systèmes de références inertielles 19A à 19N, ce qui permet de transmettre au calculateur 4 une vitesse sol qui présente un haut niveau d'intégrité. En cas d'incohérence (entraînant un défaut de communication d'une vitesse sol), la fonction de calcul de décélération minimale et ainsi la fonction BTV ne sont plus disponibles.

Par ailleurs, lesdits moyens 12 comprennent également des moyens 23 qui sont intégrés dans ledit calculateur 4 et qui sont formés de manière à estimer la distance entre l'avion et le seuil de la piste utilisée pour l'atterrissage, en intégrant la vitesse sol reçue des moyens 20. Ceci permet de calculer et de fournir une distance avion-seuil présentant également un haut niveau d'intégrité.

L'intégrateur réalisant l'intégration de la vitesse sol est initialisé à zéro tant que le seuil de la piste n'est pas franchi. L'estimation du franchissement du seuil de piste est basée sur la hauteur de l'avion par rapport au sol. Lorsque la hauteur radio-altimétrique devient inférieure à une hauteur prédéterminée (par exemple 50 pieds), fonction du type de l'avion, le seuil de piste est considéré comme franchi.

Cette hauteur radio-altimétrique étant issue de calculateurs à très haut niveau d'intégrité, l'estimation de la distance avion-seuil de piste est donc, elle aussi, à haut niveau d'intégrité.

En outre, la longueur de piste étant uniquement disponible dans une base de données extraite par un calculateur à faible niveau d'intégrité (de type OANS sur un avion A380), cette donnée ne peut être utilisée telle qu'elle. Aussi, selon l'invention, pour pouvoir fournir une valeur de longueur de piste présentant également un haut niveau d'intégrité, lesdits moyens 12 comprennent de plus :
- des moyens de stockage 24 qui sont intégrés dans ledit calculateur 4 et qui mémorisent une valeur de longueur de la piste (utilisée pour l'atterrissage), dès que le pilote arme la fonction BTV ; et
- un calculateur d'affichage 25 (par exemple de type CDS sur un avion A380) à haut niveau d'intégrité (certifié DAL A) qui reçoit (via une liaison 26) cette valeur et l'affiche sur un écran 27 du poste de pilotage.

Par procédure, le pilote doit alors vérifier que la valeur affichée sur l'écran 27 est bien la même que celle inscrite sur des cartes d'approche à sa disposition. Si tel n'est pas le cas, il doit dégager la fonction de freinage automatique (fonction BTV). Cette procédure assure ainsi que la valeur de longueur de piste, utilisée dans le calcul de la décélération minimale par les moyens 13, sera elle aussi à haut niveau d'intégrité.

Les données utilisées par le dispositif 1 pour le calcul de la décélération minimale devant présenter un haut niveau d'intégrité, on prend donc en compte, selon l'invention, soit des données issues de calculateurs à haut niveau d'intégrité soit des données qui ont été consolidées par un moyen (ou une procédure) approprié.

Par ailleurs, lesdits moyens 13 calculent ladite décélération minimale à partir de l'estimation de la distance entre l'avion et le seuil de la piste (reçue des moyens 23) et à partir de la longueur de la piste (reçue des moyens 24), en mettant en oeuvre une loi de décélération usuelle, telle qu'indiquée par exemple dans le document FR-2 903 801.

En particulier, la décélération minimale peut être calculée suivant une loi usuelle appropriée du type :
- à décélération constante ;
- à décélération de type rampe ou rampe-plateau,...

## Revendications

1. Dispositif d'aide au pilotage d'un avion lors d'une phase d'atterrissage sur un aéroport, ledit dispositif (1) étant pourvu d'un système de freinage automatique (10) qui est susceptible de freiner automatiquement l'avion lors du roulage au sol sur une piste d'atterrissage, ledit système de freinage (10) comportant :
- un calculateur de commandes de vol (4), pour calculer une décélération nominale permettant, lorsqu'elle est appliquée à l'avion, de l'arrêter au niveau d'une sortie sélectionnée sur la piste d'atterrissage ; et
- un calculateur de freinage (7), pour calculer, à partir d'une décélération reçue, des ordres de commande de moyens de freinage (2) de l'avion, **caractérisé en ce que** :
- ledit dispositif comporte de plus :
• des premiers moyens (12) pour fournir des données présentant un taux d'occurrence d'erreur ou d'altération qui est compatible avec des objectifs de sécurité requis sur un avion lors d'un atterrissage , lesdites données comprenant au moins les données suivantes :
▪ une valeur de vitesse sol de l'avion ;
▪ une estimation de la distance entre l'avion et le seuil de la piste utilisée pour l'atterrissage;
et, optionnellement,
▪ une valeur de longueur de la piste utilisée pour l'atterrissage ;
• des deuxièmes moyens (13) pour calculer, à partir desdites données, une décélération minimale permettant de s'assurer que l'avion s'arrête avant la fin de la piste d'atterrissage, lorsque cette décélération minimale est appliquée audit avion ; et
• des troisièmes moyens (14) pour comparer ladite décélération nominale à ladite décélération minimale et pour transmettre audit calculateur de freinage (7) la décélération la plus élevée ;
- lesdits deuxièmes et troisièmes moyens (13, 14) font partie dudit calculateur de commandes de vol (4) ;
- lesdits premiers moyens (12) comprennent une pluralité de systèmes de références inertielles (19A à 19N) susceptibles de générer des vitesses sol de l'avion, ainsi que des moyens de passivation (20) pour fournir une vitesse sol comme donnée, uniquement en cas de cohérence entre les vitesses sol issues respectivement desdits systèmes de références inertielles (19A à 19N) ; et
- lesdits premiers moyens (12) comprennent des moyens (23) qui sont intégrés dans ledit calculateur de commandes de vol (4) et qui sont formés de manière à estimer la distance entre l'avion et le seuil de la piste utilisée pour l'atterrissage, en intégrant une vitesse sol.

2. Dispositif selon la revendications 1,
**caractérisé en ce que** lesdits premiers moyens (12) comprennent :
- des moyens de stockage (24) qui sont intégrés dans ledit calculateur de commandes de vol (4) et qui mémorisent une valeur de longueur de la piste utilisée pour l'atterrissage ; et
- un calculateur d'affichage (25) du cockpit de l'avion, qui reçoit cette valeur et l'affiche sur un écran (27) du poste de pilotage.

3. Dispositif selon la revendication 2,
**caractérisé en ce que** le calculateur d'affichage (25) du cockpit de l'avion est certifié DAL A selon la norme DO-178B.

4. Dispositif selon l'une quelconque des revendications précédentes,
**caractérisé en ce que** lesdits deuxièmes moyens (13) calculent ladite décélération minimale à partir d'une estimation de la distance entre l'avion et le seuil de la piste et de la longueur de la piste, en mettant en oeuvre une loi de décélération.

5. Dispositif selon l'une quelconque des revendications précédentes,
**caractérisé en ce que** le calculateur de commandes de vol (4) est un calculateur de commandes de vol primaire de l'avion.

6. Dispositif selon l'une quelconque des revendications précédentes,
**caractérisé en ce que** le calculateur de commandes de vol (4) et le calculateur de freinage (7) sont certifiés DAL A selon fa norme DO-178B.

7. Procédé d'aide au pilotage d'un avion lors d'une phase d'atterrissage sur un aéroport, ledit avion étant pourvu d'un système de freinage automatique (10) qui est susceptible de freiner automatiquement l'avion lors du roulage au sol sur une piste d'atterrissage, ledit système de freinage (10) comportant :
- un calculateur de commandes de vol (4), pour calculer une décélération nominale permettant, lorsqu'elle est appliquée à l'avion, de l'arrêter au niveau d'une sortie sélectionnée sur la piste d'atterrissage ; et
- un calculateur de freinage (7), pour calculer, à partir d'une décélération reçue, des ordres de commande de moyens de freinage (2) de l'avion, **caractérisé en ce que** :
- on prévoit de plus :
• des premiers moyens (12) pour fournir des données présentant un taux d'occurrence d'erreur ou d'altération qui est compatible avec des objectifs de sécurité requis sur un avion lors d'un atterrissage, lesdites données comprenant au moins les données suivantes :
▪ une valeur de vitesse sol de l'avion ;
▪ une estimation de la distance entre l'avion et le seuil de la piste utilisée pour l'atterrissage;
et, optionnellement,
▪ une valeur de longueur de la piste utilisée pour l'atterrissage ;
• des deuxièmes moyens (13) pour calculer, à partir desdites données, une décélération minimale permettant de s'assurer que l'avion s'arrête avant la fin de la piste d'atterrissage, lorsque cette décélération minimal est appliquée à l'avion ; et
• des troisièmes moyens (14) pour comparer ladite décélération nominale à ladite décélération minimale et pour transmettre audit calculateur de freinage (7) la décélération la plus élevée ;
- lesdits deuxièmes et troisièmes moyens (13, 14) font partie dudit calculateur de commandes de vol (4) ;
- lesdits premiers moyens (12) comprennent une pluralité de systèmes de références inertielles (19A à 19N) susceptibles de générer des vitesses sol de l'avion, ainsi que des moyens de passivation (20) pour fournir une vitesse sol comme donnée, uniquement en cas de cohérence entre les vitesses sol issues respectivement desdits systèmes de références inertielles (19A à 19N) ; et
- lesdits premiers moyens (12) comprennent des moyens (23) qui sont intégrés dans ledit calculateur de commandes de vol (4) et qui sont formés de manière à estimer la distance entre l'avion et le seuil de la piste utilisée pour l'atterrissage, en intégrant une vitesse sol.

8. Avion,
**caractérisé en ce qu'**il comporte un dispositif d'aide au pilotage (1) tel que celui spécifié sous l'une quelconque des revendications 1 à 6.

## Patentansprüche

1. Flughilfevorrichtung eines Flugzeuges bei einer Landephase auf einem Flughafen, wobei die besagte Vorrichtung (1) mit einem automatischen Bremssystem (10) versehen ist, das geeignet ist, das Flugzeug beim Rollen auf einer Landebahn automatisch zu bremsen, wobei das besagte Bremssystem (10) Folgendes umfasst:
- einen Flugsteuerungsrechner (4), um eine nominale Verzögerung zu berechnen, die es ermöglicht, wenn sie auf das Flugzeug angewandt wird, es auf der Höhe einer ausgewählten Ausfahrt auf der Landebahn anzuhalten; und
- einen Bremsrechner (7), um ausgehend von einer empfangenen Verzögerung, Steuerbefehle für die Bremsmittel (2) des Flugzeuges zu berechnen,
**dadurch gekennzeichnet, dass**:
- die besagte Vorrichtung darüber hinaus Folgendes umfasst:
• erste Mittel (12), um Daten zu liefern, die eine Häufigkeit des Auftretens eines Fehlers oder einer Veränderung angeben, die mit Sicherheitsziefen kompatibel ist, die in einem Flugzeug während der Landung erforderlich sind, wobei die besagten Daten zumindest die folgenden Daten umfassen:
einen Wert für die Bodengeschwindigkeit des Flugzeuges;
■ eine Schätzung für die Distanz zwischen dem Flugzeug und der Schwelle der für die Landung benutzten Landebahn; und optional
▪ einen Wert für die Länge der für die Landung benutzten Landebahn;
• zweite Mittel (13), um ausgehend von den besagten Daten eine minimale Verzögerung zu berechnen, die es ermöglicht, sich davon zu vergewissern, dass das Flugzeug vor dem Ende der Landebahn anhält, wenn diese minimale Verzögerung auf das besagte Flugzeug angewandt wird; und
• dritte Mittel (14), um die besagte nominale Verzögerung mit der besagten minimalen Verzögerung zu vergleichen und an den besagten Bremsrechner (7) die größte Verzögerung zu übertragen;
- die besagten zweiten und die dritten Mittel (13,14) sind Teil des besagten Flugsteuerungsrechners (4);
- die besagten ersten Mittel (12) umfassen eine Vielzahl von Trägheitsbezugssystemen (19A bis 19N), die geeignet sind, um Bodengeschwindigkeiten des Flugzeuges zu erzeugen, sowie Passivierungsmittel (20), um lediglich im Fall einer Kohärenz zwischen den Bodengeschwindigkeiten, die jeweils aus den besagten Trägheitsbezugssystemen (19A bis 19N) stammen, eine Bodengeschwindigkeit als Datum zu erzeugen; und
- die besagten ersten Mittel (12) umfassen Mittel (23), die in den besagten Flugsteuerungsrechner (4) integriert sind und die so ausgebildet sind, um die Distanz zwischen dem Flugzeug und der Schwelle der für die Landung benutzten Landebahn zu schätzen, indem eine Bodengeschwindigkeit integriert wird.

2. Vorrichtung nach Anspruch 1,
**dadurch gekennzeichnet, dass** die besagten ersten Mittel (12) Folgendes umfassen:
- Speichermittel (24), die in den besagten Flugsteuerungsrechner (4) integriert sind und die einen Wert für die Länge der für die Landung benutzten Landebahn speichern; und
- ein Anzeigerechner (25) für das Cockpit des Flugzeuges, der diesen Wert empfängt und ihn auf einem Bildschirm (27) des Steuerstandes anzeigt.

3. Vorrichtung nach Anspruch 3,
**dadurch gekennzeichnet, dass** der Anzeigerechner (25) für das Cockpit des Flugzeuges als DAL A gemäß der Norm DO-178B zertifiziert ist.

4. Vorrichtung nach einem der vorherigen Ansprüche,
**dadurch gekennzeichnet, dass** die besagten zweiten Mittel (13) die besagte minimale Verzögerung aus einer Schätzung der Distanz zwischen dem Flugzeug und der Schwelle der Landebahn und der Länge der Landebahn berechnen, indem sie ein Verzögerungsgesetz anwenden.

5. Vorrichtung nach einem der vorherigen Ansprüche,
**dadurch gekennzeichnet, dass** der Flugsteuerungsrechner (4) ein primärer Flugsteuerungsrechner des Flugzeuges ist.

6. Vorrichtung nach einem der vorherigen Ansprüche, **dadurch gekennzeichnet, dass** der Flugsteuerungsrechner (4) und der Bremsrechner (7) als DAL A gemäß der Norm DO-178B zertifiziert sind.

7. Flughüfeverfahren eines Flugzeuges bei einer Landephase auf einem Flughafen, wobei das besagte Flugzeug mit einem automatischen Bremssystem (10) versehen ist, das geeignet ist, das Flugzeug beim Rollen auf einer Landebahn automatisch zu bremsen, wobei das besagte Bremssystem (10) Folgendes umfasst:
- einen Flugsteuerungsrechner (4), um eine nominale Verzögerung zu berechnen, die es ermöglicht, wenn sie auf das Flugzeug angewandt wird, es auf der Höhe einer ausgewählten Ausfahrt auf der Landebahn anzuhalten; und
- einen Bremsrechner (7), um ausgehend von einer empfangenen Verzögerung, Steuerbefehle für die Bremsmittel (2) des Flugzeuges zu berechnen,
**dadurch gekennzeichnet, dass**:
- außerdem vorgesehen sind:
• erste Mittel (12), um Daten zu liefern, die eine Häufigkeit des Auftretens eines Fehlers oder einer Veränderung angeben, die mit Sicherheitszielen kompatibel ist, die in einem Flugzeug während der Landung erforderlich sind, wobei die besagten Daten zumindest die folgenden Daten umfassen:
▪ einen Wert für die Bodengeschwindigkeit des Flugzeuges;
▪ eine Schätzung für die Distanz zwischen dem Flugzeug und der Schwelle der für die Landung benutzten Landebahn; und optional
▪ einen Wert für die Länge der für die Landung benutzten Landebahn;
• zweite Mittel (13), um ausgehend von den besagten Daten eine minimale Verzögerung zu berechnen, die es ermöglicht, sich davon zu vergewissern, dass das Flugzeug vor dem Ende der Landebahn anhält, wenn diese minimale Verzögerung auf das Flugzeug angewandt wird; und
• dritte Mittel (14), um die besagte nominale Verzögerung mit der besagten minimalen Verzögerung zu vergleichen und an den besagten Bremsrechner (7) die größte Verzögerung zu übertragen;
- die besagten zweiten und die dritten Mittel (13,14) sind Teil des besagten Flugsteuerungsrechners (4);
- die besagten ersten Mittel (12) umfassen eine Vielzahl von Trägheitsbezugssystemen (19A bis 19N), die geeignet sind, um Bodengeschwindigkeiten des Flugzeuges zu erzeugen, sowie Passivierungsmittel (20), um lediglich im Fall einer Kohärenz zwischen den Bodengeschwindigkeiten, die jeweils aus den besagten Trägheitsbezugssystemen (19A bis 19N) stammen, eine Bodengeschwindigkeit als Datum zu erzeugen; und
- die besagten ersten Mittel (12) umfassen Mittel (23), die in den besagten Flugsteuerungsrechner (4) integriert sind und die so ausgebildet sind, um die Distanz zwischen dem Flugzeug und der Schwelle der für die Landung benutzten Landebahn zu schätzen, indem eine Bodengeschwindigkeit integriert wird.

8. Flugzeug,
**dadurch gekennzeichnet, dass** es eine Flughilfevorrichtung (1) nach einem der Ansprüche 1 bis 6 umfasst.

## Claims

1. A device for aiding the piloting of an airplane during a phase of landing on an airport, said device (1) being provided with an automatic braking system (10) which is able to automatically brake the airplane during the ground rollout on a landing runway, said braking system (10) comprising:
- a flight controls computer (4), for computing a nominal deceleration making it possible, when it is applied to the airplane, to stop it level with a selected exit on the landing runway; and
- a braking computer (7), for computing, on the basis of a deceleration received, commands for control of braking means (2) of the airplane, **characterized in that**:
- said device moreover comprises:
• first means (12) for providing data exhibiting a rate of occurrence of error or of alteration which is compatible with safety objectives required on an airplane during a landing, said data comprising at least one of the following data:
- a value of ground speed of the airplane;
- an estimation of the distance between the airplane and the threshold of the runway used for landing;
and, optionally:
- a value of length of the runway used for landing;
• second means (13) for computing, on the basis of said data, a minimum deceleration making it possible to ensure that the airplane stops before the end of the landing runway, when this minimum deceleration is applied to said airplane; and
• third means (14) for comparing said nominal deceleration with said minimum deceleration and for transmitting the higher deceleration to said braking computer (7); and
- said second and third means (13, 14) form part of said flight controls computer (4);
- said first means (12) comprise a plurality of inertial reference systems (19A to 19N) able to generate ground speeds of the airplane, as well as passivation means (20) for providing a ground speed as given data, solely in the case of consistency between the ground speeds arising respectively from said inertial reference systems (19A to 19N); and
- said first means (12) comprise means (23) which are integrated into said flight controls computer (4) and which are formed so as to estimate the distance between the airplane and the threshold of the runway used for landing, by integrating a ground speed.

2. The device as claimed in claim 1,
**characterized in that** said first means (12) comprise:
- storage means (24) which are integrated into said flight controls computer (4) and which store a value of length of the runway used for landing; and
- a display computer (25) of the cockpit of the airplane, which receives this value and displays it on a screen (27) of the flight deck.

3. The device as claimed in claim 2,
**characterized in that** the display computer (25) of the cockpit of the airplane is DAL A certified according to standard DO-178B.

4. The device as claimed in any one of the preceding claims,
**characterized in that** said second means (13) compute said minimum deceleration on the basis of an estimation of the distance between the airplane and the threshold of the runway and of the length of the runway, by implementing a deceleration law.

5. The device as claimed in any one of the preceding claims,
**characterized in that** the flight controls computer (4) is a primary flight controls computer of the airplane.

6. The device as claimed in any one of the preceding claims,
**characterized in that** the flight controls computer (4) and the braking computer (7) are DAL A certified according to standard DO-178B.

7. A method for aiding the piloting of an airplane during a phase of landing on an airport, said airplane being provided with an automatic braking system (10) which is able to automatically brake the airplane during the ground rollout on a landing runway, said braking system (10) comprising:
- a flight controls computer (4), for computing a nominal deceleration making it possible, when it is applied to the airplane, to stop it level with a selected exit on the landing runway; and
- a braking computer (7), for computing, on the basis of a deceleration received, commands for control of braking means (2) of the airplane, **characterized in that**:
- also provided are:
• first means (12) for providing data exhibiting a rate of occurrence of error or of alteration which is compatible with safety objectives required on an airplane during a landing, said data comprising at least one of the following data:
- a value of ground speed of the airplane;
- an estimation of the distance between the airplane and the threshold of the runway used for landing;
and, optionally:
- a value of length of the runway used for landing;
• second means (13) for computing, on the basis of said data, a minimum deceleration making it possible to ensure that the airplane stops before the end of the landing runway, when this minimum deceleration is applied to the airplane; and
• third means (14) for comparing said nominal deceleration with said minimum deceleration and for transmitting the higher deceleration to said braking computer (7);
- said second and third means (13, 14) form part of said flight controls computer (4);
- said first means (12) comprise a plurality of inertial reference systems (19A to 19N) able to generate ground speeds of the airplane, as well as passivation means (20) for providing a ground speed as given data, solely in the case of consistency between the ground speeds arising respectively from said inertial reference systems (19A to 19N); and
- said first means (12) comprise means (23) which are integrated into said flight controls computer (4) and which are formed so as to estimate the distance between the airplane and the threshold of the runway used for landing, by integrating a ground speed.

8. An airplane,
which comprises a device for aiding piloting (1) such as that specified under any one of claims 1 to 6.
